(19) Europäisches Patentamt
European Patent Office
Office européen des brevets

(11) EP 0 747 454 A1

# (12) EUROPÄISCHE PATENTANMELDUNG

(43) Veröffentlichungstag: **11.12.1996 Patentblatt 1996/50**

(51) Int. Cl.$^6$: **C09D 4/00**, C08F 299/02, C09D 4/06

(21) Anmeldenummer: **96108631.1**

(22) Anmeldetag: **30.05.1996**

(84) Benannte Vertragsstaaten:
**AT BE CH DE ES FR GB IT LI NL SE**

(30) Priorität: **08.06.1995 DE 19520888**

(71) Anmelder: **BASF Aktiengesellschaft**
**67063 Ludwigshafen (DE)**

(72) Erfinder:
- **Schwalm, Reinhold Dr.**
  **67157 Wachenheim (DE)**
- **Reich, Wolfgang Dr.**
  **67133 Maxdorf (DE)**
- **Häussling, Lukas Dr.**
  **67098 Bad Dürkheim (DE)**
- **Beck, Erich Dr.**
  **68528 Ladenburg (DE)**

## (54) Strahlungshärtbare Zusammensetzungen, enthaltend mehrfunktionelle Acrylate und verkappte Amine

(57) Strahlungshärtbare Zusammensetzungen, enthaltend

a) Verbindungen mit mindestens zwei Kohlenstoff-Kohlenstoff Doppelbindungen, an die sich primär oder sekundär Aminogruppen in Form einer Michael-analogen Addition anlagern können (im nachfolgenden kurz aktivierte Doppelbindungen genannt)

b) verkappte Aminoverbindungen, welche bei Bestrahlung mit energiereichem Licht Aminoverbindungen mit primären, sekundären oder primären und sekundären Aminogruppen freisetzen, wobei die Anzahl der in den Aminogruppen gebundenen H-Atome (aminische H-Atome) insgesamt mindestens 2 ist.

EP 0 747 454 A1

## Beschreibung

Die Erfindung betrifft strahlungshärtbare Zusammensetzungen, enthaltend

a) Verbindungen mit mindestens zwei Kohlenstoff-Kohlenstoff Doppelbindungen, an die sich primäre oder sekundäre Aminogruppen in Form einer Michael-analogen Addition anlagern können (im nachfolgenden kurz aktivierte Doppelbindungen genannt)

b) verkappte Aminoverbindungen, welche bei Bestrahlung mit energiereichem Licht Aminoverbindungen mit primären, sekundären oder primären und sekundären Aminogruppen freisetzen, wobei die Anzahl der in den Aminogruppen gebundenen H-Atome (aminische H-Atome) insgesamt mindestens 2 ist.

Weiterhin betrifft die Erfindung die Verwendung der strahlungshärtbaren Zusammensetzungen zur Herstellung von Beschichtungen und Formkörpern.

Acrylathaltige Beschichtungen werden photochemisch in der Regel durch radikalische Polymerisation gehärtet. Die Michael-analoge Addition von Aminen an Acrylate ist ebenfalls bekannt, z.B. zur Modifizierung von Acrylatharzen, wie es in DE-A-23 46 424 beschrieben ist. Die in geringen Mengen eingesetzten Amine addieren sich dabei durch Michael-analoge Reaktion an die Doppelbindung. Die Michael-Addukte bewirken eine Steigerung der Reaktivität bei der nachfolgenden Polymerisation der im Überschuß vorhandenen Acryldoppelbindungen durch Bestrahlen mit UV-Licht.

Radikalisch ablaufende Reaktionen wie die Polymerisation der Acryldoppelbindungen sind oft mit Nachteilen verbunden, welche u.a. in möglichen Nebenreaktionen wie Oxidationen oder Pfropfungen oder z.B. in einer Inhibierung der Reaktion durch Sauerstoff bestehen.

Es besteht daher nach wie vor ein Bedarf an alternativen photochemisch induzierten Härtungssystemen.

Aufgabe der vorliegenden Erfindung war daher, solche alternativen Härtungssysteme zur Verfügung zu stellen.

Demgemäß wurden die oben definierten strahlungshärtbaren Zusammensetzungen sowie ihre Verwendung zur Herstellung von Beschichtungen und Formkörpern gefunden.

Bei der vorliegenden Erfindung handelt es sich um ein neues, photochemisch induziertes Härtungssystem, bei dem verkappte Aminoverbindungen erst durch Bestrahlen mit energiereichem Licht Aminoverbindungen mit insgesamt mindestens 2 aminischen H-Atomen bilden. Die erhaltenen Aminoverbindungen sind entsprechend mindestens 2 mal zur Michael-Addition an Acrylgruppen befähigt. Nach Bildung der Aminoverbindung aus der verkappten Aminoverbindung führt so die Michael-Addition an die Acrylgruppen zum gehärteten Produkt.

Die erfindungsgemäßen strahlungshärtbaren Zusammensetzungen enthalten Verbindungen a) und verkappte Aminoverbindungen b).

Verbindungen a) enthalten mindestens 2, vorzugsweise 2 bis 20, besonders bevorzugt 2 bis 10 und ganz besonders bevorzugt 2 bis 6 Kohlenstoff-Kohlenstoff Doppelbindungen, an die sich primäre oder sekundäre Aminogruppen in Form einer Michael-Addition anlagern können. Doppelbindungen, an die eine solche Addition erfolgen können, sind im allgemeinen aktivierte Doppelbindungen, vorzugsweise handelt es sich um Doppelbindungen, welche durch mindestens eine, vorzugsweise eine oder zwei, besonders bevorzugt eine Gruppe Z substituiert sind.

Bei Z handelt es sich um eine Gruppe, ausgewählt aus

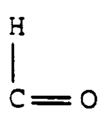 , 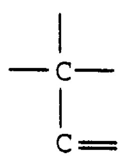 , 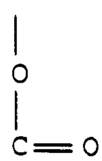 , 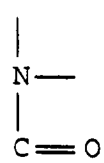 ,

$C \equiv N$ , $NO_2$ ,

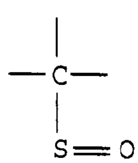 ,

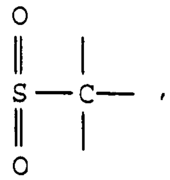

$CF_3$ , F

An den freien Valenzen in den obigen Formeln befindet sich z.B. vorzugsweise ein H-Atom und/oder ein organischer Rest.

Besonders bevorzugt handelt es sich bei Z um eine Gruppe

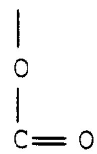

Als Verbindungen a) geeignet sind z.B. Polyester, wie sie durch Kondensation von Maleinsäure oder Fumarsäure mit mehrwertigen, insbesondere 2- bis 6-wertigen Alkoholen erhältlich sind. Es handelt sich dabei vorzugsweise um niedermolekulare Alkohole mit einem Molgewicht unter 5000, insbesondere unter 2000, besonders bevorzugt unter 500 g/mol.

Besonders bevorzugt sind Acrylatverbindungen als Verbindungen a), d.h. Acrylgruppen als aktivierte Doppelbindungen.

Unter den Acrylatverbindungen a) werden neben Derivaten der Acrylsäure auch solche der Methacrylsäure verstanden. Die Derivate der Acrylsäure sind jedoch bevorzugt.

Die Acrylatverbindungen a) enthalten im Mittel bevorzugt 2 bis 20, besonders bevorzugt 2 bis 10 und ganz besonders bevorzugt 2 bis 6 Acrylgruppen im Molekül.

Das zahlenmittlere Molekulargewicht $M_n$ der Verbindungen a), insbesondere Acrylatverbindungen liegt bevorzugt unter 15000, besonders bevorzugt unter 5000, ganz besonders bevorzugt unter 3000 g/mol (bestimmt durch Gelpermeationschromatographie mit Polystyrol als Standard und Tetrahydrofuran als Elutionsmittel).

Als Acrylatverbindungen genannt seien z.B. Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als Acrylatverbindungen seien weiterhin Polyesteracrylate genannt, wobei es sich um die Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyesteracrylate können in mehreren Stufen oder auch einstufig, wie z.B. in EP 279 303 beschrieben, aus Acrylsäure, Polycarbonsäure, Polyol hergestellt werden.

Weiterhin kann es sich bei Verbindungen a) z.B. um Epoxid- oder Urethanacrylate handeln.

Epoxid(meth)acrylate sind z.B. solche wie sie durch Umsetzung von epoxidierten Olefinen oder Poly- bzw. Diglycidylethern, wie Bisphenol-A-diglycidylether, mit (Meth)acrylsäure erhältlich sind.

Die Umsetzung ist dem Fachmann bekannt und z.B. in R. Holmann, U.V. and E.B. Curing Formulation for Printing Inks and Paints, London 1984, beschrieben.

Bei Urethanacrylaten handelt es sich insbesondere um Umsetzungsprodukte von Hydroxyalkylacrylaten mit Poly- bzw. Diisocyanaten (s. ebenfalls R. Holmann, U.V. and E.B. Curing Formulation for Printing Inks and Paints, London 1984).

Es können natürlich auch Mischungen verschiedener Verbindungen a), insbesondere auch Mischungen der obigen Acrylate, eingesetzt werden.

Neben den Verbindungen a) enthalten die erfindungsgemäßen Zusammensetzungen verkappte Aminoverbindungen b). Bei Bestrahlung mit energiereichem Licht werden Verbindungen mit einer oder mehreren Aminogruppe(n) gebildet oder freigesetzt, die sich an aktivierte Doppelbindungen, z.B. Acryldoppelbindungen, gemäß einer Michael-Addition anlagern können.

Die Anlagerung kann z.B. wie folgt erfolgen:

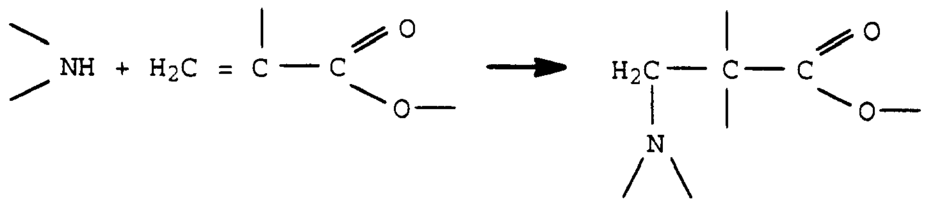

Die Anzahl der in der oder den Aminogruppen gebundenen H-Atome (aminische H-Atome) ist mindestens 2. Bevorzugt ist die Anzahl 2 bis 6, insbesondere 2 bis 4.

Da die Anzahl der aminischen H-Atome mindestens 2 ist, erfolgt auch entsprechend eine Addition an mindestens 2 aktivierte Doppelbindungen bzw. Acrylgruppen.

Im Falle einer primären Aminogruppe (2 aminische H-Atome) erfolgt zunächst eine Addition an eine aktivierte Doppelbindungen, wobei eine sekundäre Aminogruppe entsteht. Letztere kann sich an eine weitere aktivierte Doppelbindungen anlagern. Verbindungen mit 2 primären Aminogruppen (4 aminische H-Atome) können sich entsprechend an 4 aktivierte Doppelbindungen und Verbindungen mit 2 sekundären Aminogruppen können sich entsprechend an 2 aktivierte Doppelbindungen anlagern.

Auf jeden Fall führt die Anlagerung so zu einer Kettenverlängerung oder Vernetzung, d.h. zur Härtung (im nachfolgenden kurz "Michael-analoge Härtung" genannt).

Das Molverhältnis von aktivierten Doppelbindungen, insbesondere Acrylgruppen, zu aminischen H-Atomen beträgt vorzugsweise mindestens 1:0,2, um eine ausreichende Härtung zu erhalten. Die Verbindungen b) können auch im Überschuß, bezogen auf die aktivierte Doppelbindung, eingesetzt werden.

Es erscheint jedoch wenig vorteilhaft, ein Molverhältnis von z.B. 1:1,2, bevorzugt 1:1, zu überschreiten, da naturgemäß nicht mehr als equimolare Mengen umgesetzt werden.

Bevorzugt ist das Verhältnis von aktivierten Doppelbindungen zu aminischen H-Atomen mindestens 1:0,4, besonders bevorzugt mindestens 1:0,8.

Verbindungen b) sind als solche bekannt.

Beispielsweise handelt es sich um Komplexverbindungen, bei denen Aminoverbindungen an ein zentrales Metallatom gebunden sind. In dieser Form sind die Aminogruppen nicht reaktiv, d.h. können keine Michael-Addition eingehen. Durch Bestrahlen mit energiereichem Licht werden die Aminoverbindungen aus den Metallkomplexen freigesetzt.

Geeignete Komplexverbindungen sind z.B. CobaltIIIamin-Komplexe, wie sie in S.K. Weit, C. Kutal und R.D. Allen, Chem. Mater. 4, 453 - 457 (1992) beschrieben sind.

Bei Verbindungen b) kann es sich insbesondere auch um Aminoverbindungen handeln, in denen die Aminogruppen durch photolabile, organische Schutzgruppen markiert sind. Durch Bestrahlen mit energiereichem Licht werden die Schutzgruppen abgespalten und die Aminoverbindungen freigesetzt. Entsprechende Verbindungen sind in V.N.R. Pillai, Photoremovable Protecting Groups in Organic Synthesis, Synthesis, Jan. 1980, Seite 1 - 26 beschrieben.

Bei den photolabilen Gruppen handelt es sich z.B. um eine Dimethyl-3,5-dimethoxybenzyloxycarbonylgruppe, eine Benzyloxycarbonylgruppe bzw. eine 3-Nitrophenylgruppe, eine Phenacylgruppe, eine 3,5-Dimethoxybenzoinylgruppe oder 2-Nitrobenzylgruppen. Als letztere seien im einzelnen die 2-Nitrobenzylgruppe, $\alpha$-substituierte 2-Nitrobenzylgruppen, 2-Nitrobenzyloxycarbonyl- und $\alpha$-substituierte 2-Nitrobenzyloxycarbonylgruppen und 2-Nitrophenylethylenglycolgruppe genannt.

Mit letzteren markierte Aminoverbindungen können bevorzugt durch Umsetzung von entsprechenden Nitrobenzylalkoholen mit Isocyanaten, z.B. aliphatischen, cycloaliphatischen und aromatischen Diisocyanaten, z.B. 1,4-Butandiisocyanat, 1,6-Hexan-diisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluylendiisocyanat, Tetramethylxylylendiisocyanat oder auch mit Urethdion-, Biuret- und Isocyanurat-Gruppen aufweisenden Additionsprodukten insbesondere von Diisocyanaten hergestellt werden.

Im folgenden werden einige Reaktionsbeispiele für die Freisetzung von Aminoverbindungen durch Bestrahlung gegeben.

1. aus CobaltIII-Aminkomplexen

$$[Co(NR_3)_5X]^{2+} \rightarrow Co^{2+} + 5NR_3 + X$$

2. aus mit photolabilen, organischen Schutzgruppen maskierten Aminen

a) Benzyloxycarbonyl-Schutzgruppen

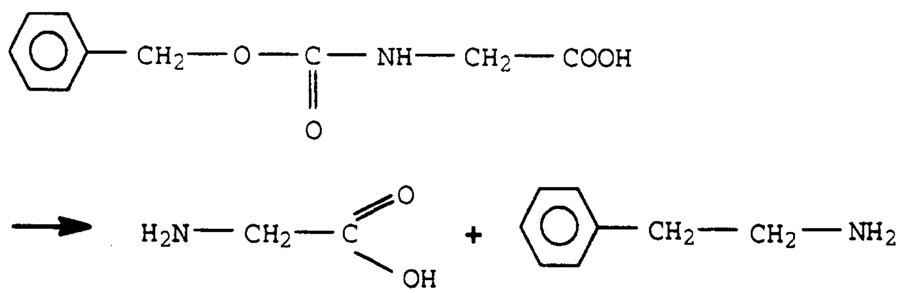

b) Nitrobenzyl- bzw. Dinitrobenzyl-substituierte Carbamatschutzgruppe

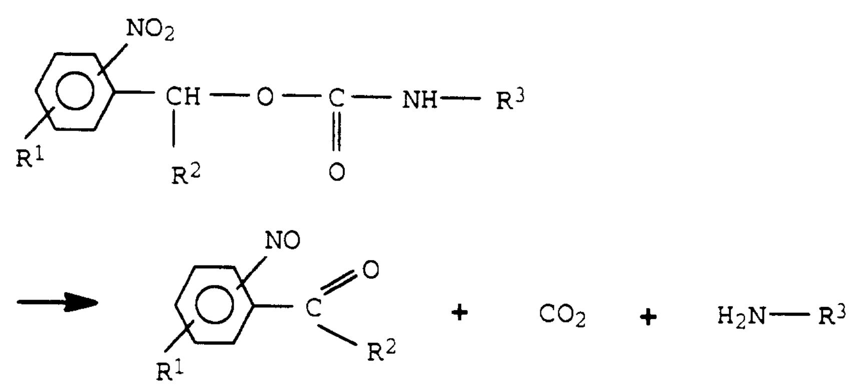

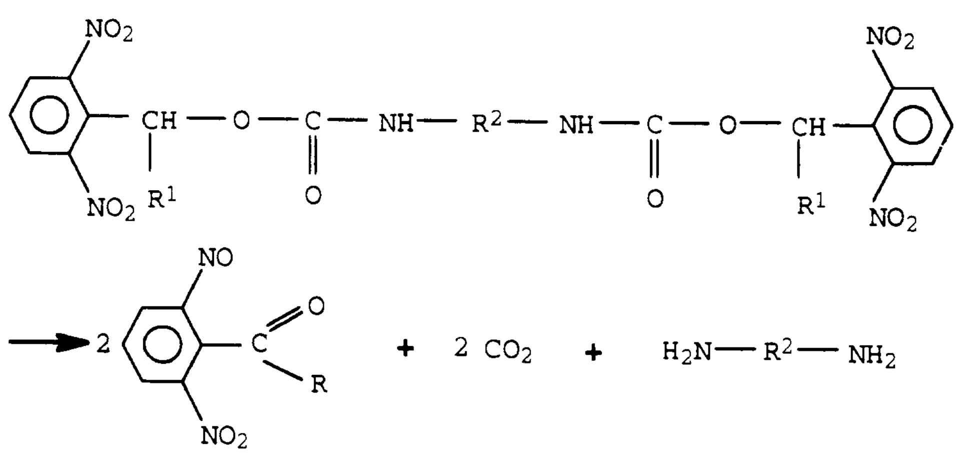

c) Dimethyl-3,5-dimethoxybenzyloxycarbonylgruppe

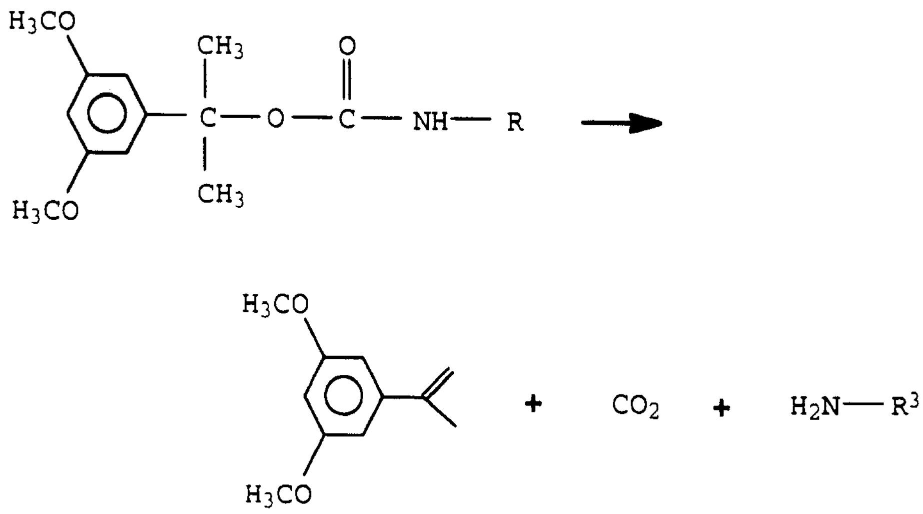

d) 3-Nitrophenylgruppe

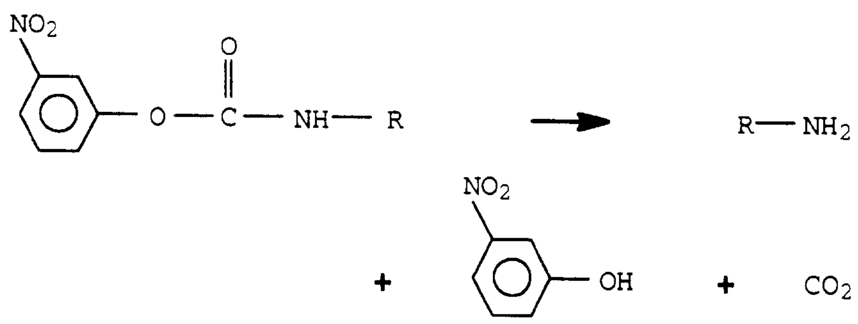

Allgemein handelt es sich bei den Verbindungen b) vorzugsweise um niedermolekulare Verbindungen, insbesondere solche mit einem Molgewicht unter 500 g/mol.

Bei den aus den Verbindungen freigesetzten Aminoverbindungen handelt es sich bevorzugt um niedermolekulare aromatische oder insbesondere aliphatische Aminoverbindungen mit einem Molgewicht ebenfalls unter 500 g/mol, besonders bevorzugt unter 300 g/mol, und wie bereits oben ausgeführt vorzugsweise 2 bis 6 aminischen H-Atomen, also z.B. einer primären Aminogruppe, zwei sekundären Aminogruppen oder auch zwei primären Aminogruppen.

Die erfindungsgemäßen Zusammensetzungen können neben den Verbindungen a) und b) weitere Bestandteile enthalten.

In Betracht kommen z.B. Verbindungen mit einer Acrylgruppe, welche wie Verbindungen a) eine Michael-Addition mit den Aminogruppen eingehen, aufgrund ihrer Monofunktionalität aber einen Kettenabbruch bewirken und endständig angebunden werden.

Der erfindungsgemäßen Zusammensetzung können auch noch andere ethylenisch ungesättigte, copolymerisierbare Verbindungen zugesetzt werden.

Die insgesamt in der erfindungsgemäßen Zusammensetzung enthaltenden ungesättigten, copolymerisierbaren Verbindungen setzen sich 0 bis 50 Gew.-%, besonders bevorzugt 0 bis 20 Gew.-%, und ganz

50 bis 100 Gew.%, besonders bevorzugt 80 bis 100 Gew.-% und ganz besonders bevorzugt 95 bis 100 Gew.-%

Verbindungen a)

0 bis 20 Gew.-%, besonders bevorzugt 0 bis 10 Gew.-% und ganz besonders bevorzugt 0 bis 5 Gew.-% Verbindungen mit einer Acrylgruppe und

0 bis 50 Gew.-%, besonders bevorzugt 0 bis 20 Gew.-%, und ganz besonders bevorzugt 0 Gew.-% weiterer ethylenisch ungesättigter copolymerisierbarer Verbindung.

Im Falle, daß letztgenannte weitere Verbindungen mitverwendet werden und/oder die Verbindungen a) im molaren Überschuß der Acrylgruppen bezogen auf die aminischen H-Atome von b) eingesetzt werden, kann die Härtung der Zusammensetzung auch zum Teil durch radikalische Copolymerisation erfolgen. Dazu kann ein Photoinitiator für die radikalische Polymerisation zugesetzt werden, der bei Bestrahlung mit UV-Licht eine zusätzliche, radikalische Härtung bewirkt. Die erfindungsgemäßen Zusammensetzungen können jedoch auch allein durch die Michael-analoge Härtung gehärtet werden.

Die erfindungsgemäßen Zusammensetzungen härten zu klebfreien Beschichtungen oder Formkörpern, welche gute mechanische Eigenschaften z.B. eine hohe Härte und gute elastische Eigenschaften aufweisen.

Die Zusammensetzung kann für die beabsichtigte Verwendung übliche Zusatzstoffe enthalten.

Bei der Verwendung als Beschichtungsmittel kann es sich dabei z.B. um Pigmente, Farbstoffe, Füllstoffe u.a. handeln.

Den erfindungsgemäßen Zusammensetzungen können auch noch Lösemittel zugesetzt werden, z.B. zur Einstellung der Verarbeitungsviskosität.
Insbesondere sind Lösemittel geeignet, in denen auch Verbindungen a) gut löslich sind, z.B, Dimethylformamid, N-Methylpyrrolidon, Butylacetat, Methylpropylenglykolacetat und Diethylenglykoldimethylether.

Bei der Strahlungshärtung der erfindungsgemäßen Zusammensetzungen wird mit energiereichem Licht der Wellenlänge bestrahlt, bei der gemäß der Natur der Verbindungen b) die Aminoverbindungen freigesetzt werden. Die Michael-Addition läuft unmittelbar nach Freisetzung der Aminoverbindungen spontan ab. Zur Beschleunigung der Michael-Addition kann die Temperatur während der Bestrahlung oder anschließend auf 40 bis 120°C gehalten werden. Im allgemeinen ist jedoch eine Temperaturerhöhung nicht notwendig.

Soweit eine zusätzliche radikalische Härtung gewünscht ist, kann die Zusammensetzung vor oder nach der vorstehend beschriebenen Michael-analogen Härtung mit Elektronenstrahlen oder mit UV-Licht, in Gegenwart eines Photoinitiators in der Zusammensetzung, bestrahlt werden, falls der benötigte Wellenlängenbereich für die Freisetzung der Aminoverbindungen in b) und für die radikalische Härtung verschieden ist.

Im allgemeinen scheinen UV-Längen mit Wellenlängenbereichen von 240 bis 400 mm und einer Leistung von 50 bis 150 W/cm zur Freisetzung der Aminoverbindungen aus b) geeignet.

Beispiele

Prüfmethoden

Ein Maß für die Reaktivität ist die Geschwindigkeit, mit der das Transportband, auf dem die zu bestrahlenden Proben liegen, an der UV-Lampe zur Bestrahlung vorbeigeführt werden kann (in m/min). Die Pedelhärte wurde gemäß DIN 53 157 bestimmt. Sie ist ein Maß für die Härte der Beschichtung, wobei höhere Werte härteren Schichten entsprechen.

Die Erichsentiefung wurde nach DIN ISO 1520 bestimmt. Sie ist ein Maß für die Flexibilität und Haftung der Beschichtung, wobei höhere Werte flexibleren Beschichtungen entsprechen.

Beispiel 1

Es wurde eine Verbindung b) aus Hexamethylendiisocyanat und 2,6-Dinitrobenzylalkohol hergestellt, wie in C.G. Illson et al. SPIE, Advances in Resist Technology and Processing X, Vol. 1925, 354 - 365, (1993), beschrieben ist.

169,2 Gew.-Teile von b) und 118,52 Gew.-Teile 1,1,1-Tris(hydroxymethyl)propan-triacrylat wurden in Diethylenglykoldimethylether gelöst, auf eine Polyesterfolie in einer Schichtdicke von ca. 20 µm aufgerakelt und bei 60°C 20 min im Umluftschrank getrocknet. Anschließend wurde die Beschichtung auf einem Transportband bestrahlt. Klebfreiheit wurde mit einer Geschwindigkeit des Transportbandes von 20 m/min erreicht. Die Pendelhärte betrug 42 s, die Erichsentiefung 3,5 mm.

Vergleichsbeispiel 1

An Stelle von b) in Beispiel 1 wurden (mit gleichem Molanteil) 67,8 Teile Hexandioldiacrylat verwendet. Dazu gab man 4 Gew.-% Photoinitiator Irgacur® 500 und verfuhr analog Beispiel 1. Mit einer Geschwindigkeit von 10 m/min erhielt man keinen klebfreien Film.

Beispiel 2

90 Gew.-Teile (Dimethyl-3,5-dimethoxybenzyloxy)carbonyl-N-cyclohexylamine und 57,8 Gew.-Teile Dipentaerythritpenta/hexaacrylat wurden wie in Beispiel 1 aufgerakelt und belichtet. Die Beschichtung war klebfrei und wies eine Pendelhärte von 52 s und eine Erichsentiefung von 2,5 mm auf.

Beispiele 3 bis 6

Analog der in Beispiel 1 angewandten Vorschrift wurden Verbindungen b) hergestellt aus o-Nitrobenzylalkohol und Hexamethylendiisocyanat (Beispiel 3), Isophorondiisocyanat (Beispiel 4), dem Isocyanurat von Hexamethylendiisocyanat (Beispiel 5) und dem Biuret von Hexamethylendiisocyanat (Beispiel 6).

Diese werden mit einem Polyesteracrylat (Laromer® LR 8799, BASF) in stöchiometrischen Mengen der Acrylgruppe zu den aminischen H-Atomen gemischt. Nach Herstellen der Beschichtungslösungen, dem Aufbringen und Belichten wurden klebfreie Filme mit folgenden Reaktivitäten und mechanischen Daten erhalten:

| Beispiel | Reaktivität (M/min) | Pendelhärte (s) | Erichsentiefung (mm) |
|---|---|---|---|
| 3 | 15 | 45 | 4,0 |
| 4 | 15 | 42 | 3,5 |
| 5 | 30 | 62 | 2,5 |
| 6 | 30 | 55 | 3,0 |

**Patentansprüche**

1. Strahlungshärtbare Zusammensetzungen, enthaltend

   a) Verbindungen mit mindestens zwei Kohlenstoff-Kohlenstoff Doppelbindungen, an die sich primäre oder sekundäre Aminogruppen in Form einer Michael-analogen Addition anlagern können (im nachfolgenden kurz aktivierte Doppelbindungen genannt)

   b) verkappte Aminoverbindungen, welche bei Bestrahlung mit energiereichem Licht Aminoverbindungen mit primären, sekundären oder primären und sekundären Aminogruppen freisetzen, wobei die Anzahl der in den Aminogruppen gebundenen H-Atome (aminische H-Atome) insgesamt mindestens 2 ist.

2. Strahlungshärtbare Zusammensetzungen gemäß Anspruch 1, wobei es sich bei den aktivierten Doppelbindungen um Gruppen

   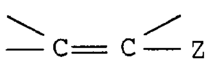

   handelt und Z für

   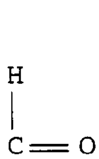 , 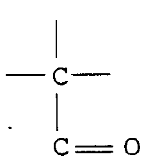 , 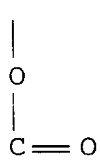 , 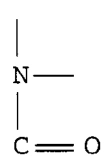 ,

   $C \equiv N$ , $NO_2$ ,

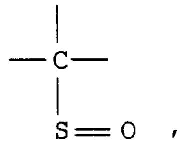

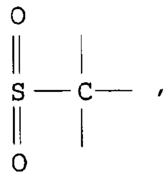

$CF_3$ , F
steht.

3. Strahlungshärtbare Zusammensetzungen gemäß Anspruch 1 oder 2, wobei es sich bei Verbindungen a) um Acrylatverbindungen mit mindestens zwei Acrylgruppen handelt.

4. Strahlungshärtbare Zusammensetzungen gemäß einem der Ansprüche 1 bis 3, wobei das Molverhältnis der aktivierten Doppelbindungen von a) zu den aminischen H-Atomen von b) 1:0,2 bis 1:1,2 beträgt.

5. Strahlungshärtbare Zusammensetzungen gemäß einem der Ansprüche 3 oder 4, wobei es sich bei den Acrylatverbindungen a) um solche mit 2 bis 6 Acrylgruppen handelt.

6. Strahlungshärtbare Zusammensetzungen gemäß einem der Ansprüche 1 bis 5, wobei es sich bei 100 bis 50 Gew.-% der in der strahlungshärtbaren Zusammensetzung enthaltenden ethylenisch ungesättigten, copolymerisierten Verbindungen um Acrylatverbindungen a) handelt.

7. Strahlungshärtbare Zusammensetzungen gemäß einem der Ansprüche 1 bis 6, wobei es sich bei b) um Verbindungen handelt, in denen Aminogruppen durch photolabile, organische Schutzgruppen maskiert sind.

8. Verwendung von strahlungshärtbaren Zusammensetzungen gemäß einem der Ansprüche 1 bis 7 zur Herstellung von Beschichtungen oder Formkörpern.

9. Formkörper oder Beschichtungen, erhältlich unter Verwendung von strahlungshärtbaren Zusammensetzungen gemäß einem der Ansprüche 1 bis 7.

Europäisches Patentamt

# EUROPÄISCHER RECHERCHENBERICHT

Nummer der Anmeldung
EP 96 10 8631

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Week 9403<br>Derwent Publications Ltd., London, GB;<br>AN 94-023040<br>XP002013240<br>& JP-A-05 331 366 (SHINGIJUTSU JIGYODAN) , 14.Dezember 1993<br>* Zusammenfassung *<br>--- | 1-9 | C09D4/00<br>C08F299/02<br>C09D4/06 |
| X | WO-A-94 28075 (AKZO NOBEL)<br>* Seite 4, Zeile 27 - Seite 11, Zeile 16 *<br>--- | 1-9 | |
| Y | WO-A-89 07123 (ANCHOR CHEMICAL TECHNICAL SERVICES)<br>* Seite 1 - Seite 4 *<br>--- | 1-9 | |
| Y | US-A-4 239 848 (ADIN ET AL.)<br>* Spalte 13, Zeile 32 - Spalte 17, Zeile 22 *<br>--- | 1-9 | |
| A | WO-A-93 21240 (BASF LACKE + FARBEN)<br>* das ganze Dokument *<br>----- | 1-9 | RECHERCHIERTE SACHGEBIETE (Int.Cl.6)<br>C09D<br>C08F |

Der vorliegende Recherchenbericht wurde für alle Patentansprüche erstellt

| Recherchenort | Abschlußdatum der Recherche | Prüfer |
|---|---|---|
| DEN HAAG | 16.September 1996 | Andriollo, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)